# EUROPÄISCHE PATENTSCHRIFT

(11) **EP 3 721 324 B1**
(45) Veröffentlichungstag und Bekanntmachung des Hinweises auf die Patenterteilung: **15.06.2022**
(21) Anmeldenummer: 19701602.5
(22) Anmeldetag: 21.01.2019
(51) Int. Cl.: G06F 3/01, B60W 50/16, G06F 3/041, B60K 37/06

(54) **BERÜHREMPFINDLICHES EINGABEGERÄT MIT SCHWINGUNGSTILGER UND DARAUF ABGESTIMMTER HAPTIKANREGUNG**
TOUCH-SENSITIVE INPUT DEVICE WITH TUNED MASS DAMPER AND HAPTIC STIMULATION ADAPTED THERETO
APPAREIL DE SAISIE À EFFLEUREMENT MUNI D'UN AMORTISSEUR DYNAMIQUE ACCORDÉ ET D'UNE ACTIVATION HAPTIQUE ADAPTÉE

(30) Priorität: 05.04.2018 DE 102018108040
(43) Veröffentlichungstag der Anmeldung: 14.10.2020
(73) Patentinhaber: Preh GmbH, 97616 Bad Neustadt a.d. Saale (DE)
(72) Erfinder: BODENSTEIN, Tobias, 97616 Salz (DE)
(74) Vertreter: Lohmanns, Bernard
(86) Internationale Anmeldenummer: PCT/EP2019/051340
(87) Internationale Veröffentlichungsnummer: WO 2019/192761

(56) Entgegenhaltungen:
- WO-A1-2016/142373
- WO-A1-2016/189017
- WO-A1-2018/002028
- DE-A1-102011 003 277

## Beschreibung

Die Erfindung betrifft ein berührempfindliches Eingabegerät, welches einen Träger, ein an dem Träger mittels erster Federmittel längs wenigstens einer Auslenkrichtung elastisch rückstellend bewegbar gelagertes, berührempfindliches Eingabeteil, wie ein Touchpad oder ein Touchscreen, insbesondere ein eine elektronische Pixelmatrixanzeige aufweisendes Touchscreen, aufweist. Beispielsweise handelt es sich um eine Anzeige im Flüssigkristallaufbau oder in OLED-Bauweise. Beispielsweise weist das Touchpad beziehungsweise der Touchscreen eine kapazitive Elektrodensensorik zur ortsauflösenden Berührdetektion auf. In einer Ausgestaltung ist ferner oder alternativ ein Kraftsensor zur Messung einer mit der Berührung einhergehenden, auf die berührempfindliche Anzeige einwirkenden Betätigungskraft vorgesehen.

Gattungsgemäß ist ferner eine wenigstens einen Aktuator aufweisende Aktuatorik vorgesehen, die das Eingabeteil längs der Auslenkrichtung antreibt, um bei erfolgter Berührung oder spätestens bei zusätzlichem Überschreiten einer vorgegebenen, durch den Kraftsensor gemessenen Betätigungskraft ein haptisches Feedback zu erzeugen, um letztlich dem Bediener eine Rückmeldung zu geben, dass eine Berührung und/oder Betätigung detektiert wurde und dass gegebenenfalls ein Schalt- oder Steuervorgang zugeordnet wird.

Bei den üblichen Eingabegeräten stützt sich der Aktuator unmittelbar an dem Träger ab, der in der Regel im Wesentlichen aus einem Thermoplast besteht. Somit werden Schwingungsimpulse, die insbesondere als Gegenimpuls bei der Haptikerzeugung entstehen, in das Gehäuse eingekoppelt. Diese nachfolgend als Sekundärschwingungen bezeichnete und unerwünschte Anregungen werden durch Körperschallabstrahlung oder in Form von Vibrationen anderer Bauteile akustisch vom Bediener wahrgenommen und als störend empfunden. Zur Vermeidung dieser Schwingungseinkopplung in den Träger wird daher das Vorsehen eines Schwingungstilgers in Form eines schwingbeweglich gelagerten Tilgerkörpers vorgeschlagen. Ein solches System ist aus dem Dokument WO 2018/002028 A1 bekannt. Dabei handelt es sich in der Regel um einen passiven Schwingungstilger, wobei durch dessen Anregung die durch die mit der haptischen Schwingungsanregung einhergehende und auf der Reaktionskraft beruhende Anregung des Trägers durch Energieentzug minimiert oder gedämpft wird.

Das Dokument DE 10 2011 003 277 A1 beschreibt eine weitere Verwendung eines Schwingungstilgers zur Reduzierung unerwünschter Vibrationen in einer Tragstruktur für ein haptisches Touchpanel. Damit eine effektive Schwingungstilgung bewirkt werden kann, ist es erforderlich, die Eigenfrequenzen der schwingbeweglichen Systeme, des schwingbeweglich gelagerten Eingabeteils einerseits und der schwingbeweglich gelagerten Tilgermasse andererseits aufeinander abzustimmen. Es hat sich gezeigt, dass Fertigungstoleranzen aber auch Veränderungen, wie temperaturabhängige Schwankungen und verschleißbedingte Veränderungen der Federelastizität einer der Federlagerungen eine genaue Abstimmung unmöglich machen. Dies führt dazu, dass die Schwingungen von Tilgerkörper nicht wunschgemäß synchron verlaufen, sondern zeitlich auseinanderdriften, insbesondere wenn, wie üblich, nach der Anregung durch den Aktor die schwingenden Systeme mit der Tilgermasse einerseits und mit dem Eingabeteil andererseits sich "selbst überlassen" werden und frei schwingen. Die dabei entstehende "unkontrollierte Schwebung" ist im Hinblick auf die bezweckte haptische Rückmeldung unerwünscht. Gleichzeitig unterliegen derartige Eingabegeräte der allgemeinen Anforderung Bauraum einzusparen.

Der Erfindung liegt daher die Aufgabe zugrunde, ein Eingabegerät mit haptischer Rückmeldung mittels aktuatorischer Bewegungsanregung bereitzustellen, bei dem für eine verbessert abgestimmte Anregung durch die Aktuatorik gesorgt ist, indem insbesondere die der Auslenkung durch den Aktor folgende Bewegung von Eingabeteil und Tilgermasse besser aufeinander abgestimmt sind und somit insgesamt gesehen das Eingabegerät in schwingungstechnischer Hinsicht verbessert ist und insbesondere bauraumsparend realisiert ist.

Erfindungsgemäß wird die Aufgabe durch ein berührempfindliches Eingabegerät mit den Merkmalen des Anspruchs 1 gelöst. Ein gleichermaßen vorteilhaftes Verfahren zur Ansteuerung ist Gegenstand des nebengeordneten Anspruchs. Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Das erfindungsgemäße Eingabegerät weist einen Träger auf. Der Begriff "Träger" ist weit auszulegen und dient im Allgemeinen der Festlegung und haltenden Funktion des Eingabegeräts, beispielsweise an einer Innenverkleidung, einer Mittelkonsole oder an einem Armaturenbrett eines Kraftfahrzeugs. Beispielsweise ist der Träger aus einem Kunststoff, wie einem Thermoplast.

Erfindungsgemäß ist ferner ein berührempfindliches Eingabeteil vorgesehen. Der Begriff "berührempfindliches Eingabeteil" ist ebenfalls weit auszulegen. Dabei handelt es sich im Allgemeinen um ein Teil des Eingabegeräts, das eine dem Bediener zugewandte Eingabefläche definiert, auf der eine Berührung durch ein Eingabeorgan oder einen Finger eines Bedieners durch eine Sensorik detektiert wird, bevorzugt ortsauflösend detektiert wird. Bevorzugt handelt es sich bei dem berührempfindlichen Eingabeteil um ein Touchpad, d.h. ein anzeigeloses Eingabeteil mit ortsauflösender Detektion einer Berührung auf einer zum Eingabeteil gehörigen Eingabefläche oder ein Touchscreen, d.h. ein Eingabeteil mit ortsauflösender Detektion einer Berührung auf einer zum Eingabeteil gehörigen Eingabefläche, wobei im letzteren Fall der Eingabefläche ferner eine elektronische Anzeige, insbesondere eine elektronische Pixelmatrixanzeige zugeordnet ist.

Beispielsweise sind der Eingabefläche ein oder mehrere Sensoren zur Detektion einer Berührung und/oder einer Druckkraft auf der Eingabefläche zugeordnet. Beispielsweise handelt es sich um mehrere in einer Matrix angeordnete Elektroden und eine zugehörige Auswerteinheit zur ortsauflösenden Berührungsdetektion und/oder einen oder mehrere Kraftsensoren zur Detektion der durch die Betätigung bewirkten Druckkraft, wie einen oder mehrere kapazitive Kraftsensoren.

Ferner sind erste Federmittel vorgesehen, mittels derer das Eingabeteil beweglich am Träger längs wenigstens einer Auslenkrichtung elastisch rückstellend und schwingbeweglich gelagert ist. Somit dienen die ersten Federmittel der Lagerung als auch der elastischen Rückstellung des Eingabeteils in eine Ruhestellung. Bevorzugt sind die ersten Federmittel als Bleche aus Federstahl ausgebildet.

Erfindungsgemäß wird vorgeschlagen, einen Tilgerkörper vorzusehen, der mittels zweiter Federmittel wenigstens entlang der Auslenkrichtung elastisch rückstellend und schwingbeweglich an dem Träger gelagert ist. Als Tilgerkörper wird beispielsweise ein Körper verstanden, der eine höhere Massendichte als eine berührempfindliche Anzeige aufweist, beispielsweise von mehr als 2,000 kg/ m³ bevorzugt mehr als 7.000 kg/m³, noch bevorzugter mehr als 10.000 kg/ m³. Der Tilgerkörper kann beliebig geformt sein. Bevorzugt ist der Tilgerkörper aus einem Metall, wie Zink oder Blei oder einer metallischen Legierung, wie einer zink- oder bleihaltigen Legierung, beispielsweise ZAMAK.

Erfindungsgemäß ist ferner ein Aktuator vorgesehen, der zwischen dem Eingabeteil und dem Tilgerkörper wirkend, beispielsweise anziehend oder abstoßend, angeordnet ist. Der Aktuator ist vorgesehen eine Auslenkung des Eingabeteils und des Tilgerkörpers aus einer zugehörigen Ruhestellung zu bewirken. Dabei weist der Aktuator wenigstens eine Wirkrichtung mit einer zur Auslenkrichtung parallelen Wirkrichtungskomponente auf. Erfindungsgemäß ist der Aktuator ausgebildet, nach der Auslenkung eine gedämpfte, freie Schwingung des Eingabeteils zur Erzeugung einer haptischen Rückmeldung entlang der Auslenkungsrichtung zu bewirken und nach der Auslenkung eine gedämpfte, freie Schwingung des Tilgerkörpers in der zur Bewegung des Eingabeteils entgegensetzten Richtung zu bewirken. Wobei die Bewegung des Eingabeteils aufgrund seines mit dem Berührorgan des Bedieners vorhandenen Berührkontakts eine haptische Rückmeldung beim Bediener hervorruft.

Bevorzugt handelt es sich um einen oder mehrere linear antreibende Aktuatoren. Bevorzugt ist der Aktuator jeweils ein elektromotorischer oder elektromagnetischer Aktuator. Beispielsweise weist der Aktuator jeweils eine Spule auf, dessen durch die Spule erzeugtes, elektromagnetisches Feld zur Zusammenwirkung mit einem Anker ausgebildet und angeordnet ist. Der Aktuator ist erfindungsgemäß vorgesehen, eine Bewegung des Eingabeteils, beispielsweise der berührempfindlichen Anzeige, zur Erzeugung einer haptischen Rückmeldung in Auslenkrichtung zu bewirken und im Wesentlichen gleichzeitig eine Bewegung des Tilgerkörpers in der zur Bewegung des Eingabeteils entgegengesetzten Richtung entlang der Auslenkrichtung zu bewirken. Der Aktuator ist erfindungsgemäß zwischen dem Eingabeteil und dem Tilgerkörper wirkend angeordnet, d.h. er stützt sich einerseits an dem Tilgerkörper ab und wirkt andererseits auf das Eingabeteil anziehend oder abstoßend ein, um eine Bewegung des Eingabeteils zur Erzeugung einer haptischen Rückmeldung, auch haptisches Feedback genannt, im Wesentlichen entgegengesetzt zur Auslenkung des Tilgerkörpers zu bewirken. Bevorzugt ist der Aktuator ausgelegt, eine annähernde Bewegung zwischen Eingabeteil und Tilgerkörper auszulösen. Bei dieser Ausführungsform wirkt der Tilgerkörper ähnlich einem passiven Schwingungstilger. Durch die Abstützung des Aktuators über den schwingbeweglich gelagerten Tilgerkörper kann die durch den Aktuator bewirkte Haptikerzeugung von dem Träger verbessert schwingungstechnisch und damit akustisch entkoppelt werden, da der Aktuator sich eben erfindungsgemäß nicht unmittelbar am Träger sondern über den beweglich am Träger gelagerten Tilgerkörper abstützt. Dadurch wird eine Entkopplung der Haptikerzeugung bewirkt. Beispielsweise ist der Aktuator, wie zuvor erwähnt, ein elektromagnetischer Aktuator und die magnetfelderzeugenden Mittel des Aktuators sind an dem Tilgerkörper befestigt, während der zugehörige Anker an dem Eingabeteil befestigt ist. Die jeweiligen Massen von Anker und Spule sind insbesondere bei dieser Ausführungsform des Aktuators bei der massenmäßigen Betrachtung von Tilgerkörper und Eingabeteil jeweils mit zu berücksichtigen und hinzu zu addieren.

Erfindungsgemäß ist ferner eine Ansteuerelektronik zur Erzeugung eines elektrischen Steuersignals für den Aktuator vorgesehen. Durch die Ansteuerelektronik wird nach Detektion einer Berührung des Eingabeteils beispielsweise durch das Touchpad oder den Touchscreen, ein Steuersignal mit einem, sich periodisch wiederholenden Beschleunigungspuls erzeugt, wobei der zeitliche Abstand zwischen dem Einsetzen zweier unmittelbar folgender Beschleunigungspulse die Periodendauer beschreibt und damit deren zeitliche Abfolge vorgibt. Bevorzugt ist in der Periode genau ein Beschleunigungspuls vorgesehen. Bevorzugt ist die Dauer des Beschleunigungspulses dabei kürzer als die halbe Periodendauer, noch bevorzugter kürzer als ein Viertel der Periodendauer. Der Beschleunigungspuls ist ausgebildet, mindestens eine erste Auslenkung von Eingabeteil und Tilgerkörper zu bewirken.

Sofern ein Kraftsensor vorhanden ist, kann zur Auslösung des Steuersignals die Detektion einer ein vorgegebenes Maß überschreitenden Betätigungskraft am Eingabeteil ferner auslösende Bedingung für das Steuersignal sein. Erfindungsgemäß ist die periodische Abfolge des Beschleunigungspulses bestimmende Periodendauer größer gewählt als die größte aus erster Abklingdauer der gedämpften Schwingung des Tilgerkörpers und aus zweiter Abklingdauer der gedämpften Schwingung des Eingabeteils, wobei die erste Abklingdauer und die zweite Abklingdauer jeweils durch den Zeitpunkt bestimmt ist, an dem die Schwingungsmaximalamplitude einer der ersten Auslenkung nachfolgenden Auslenkungen betragsmäßig gegenüber der Schwingungsmaximalamplitude der ersten Auslenkung um 20dB abgefallen ist, sofern durch den Beschleunigungspuls ein Überschwingen der Ruhelage nach der ersten Auslenkung bewirkt wird. Für den Fall, dass der ersten Auslenkung kein Überschwingen der Ruhelage folgt, und beispielsweise eine asymptotische Annäherung an die Ruhelage vollzogen wird, wird die erste und zweite Abklingdauer jeweils durch den Zeitpunkt bestimmt, an dem die Amplitude der ersten Auslenkung, also die Auslenkamplitude von Tilgerkörper bzw. Eingabeteil, nach Erreichen der Schwingungsmaximalamplitude gegenüber der Schwingungsmaximalamplitude um 40dB abgefallen ist.

Dadurch, dass die periodische Anregung erfindungsgemäß jeweils erst nach ausreichendem "Abklingen" der Schwingung sowohl des Eingabeteils als auch des Tilgerkörpers erfolgt, wird ein präziseres, durch den Verlauf des Ansteuersignals vorhersehbares Schwingungsverhalten erreicht.

Bevorzugt weist das Ansteuersignal innerhalb einer Periode neben dem einen Beschleunigungspuls wenigstens einen Bremspuls auf. Bevorzugt ist der Bremspuls jeweils zeitlich nach dem Erreichen der Maximalauslenkung und dem ersten, der Ruhelage entsprechenden Nulldurchgang von Eingabeteil beziehungsweise Tilgerkörper vorgesehen. Durch den Bremspuls kann die Abklingdauer verringert werden.

Bevorzugt sind eine Dämpfung der gedämpften Schwingung von Eingabeteil und Tilgerkörper und/oder der Bremspuls, beispielsweise in Dauer und Stärke so gewählt, dass die zuvor definierte Abklingdauer jeweils zwischen einem ersten und zweiten, durch die Ruhelage definierten Nulldurchgang von Eingabeteil beziehungsweise Tilgerkörper erreicht ist.

Gemäß einer bevorzugten Ausgestaltung sind ein erstes Dämpfungsmittel, das zwischen dem Träger und dem Tilgerkörper vorgesehen ist und ein zweites Dämpfungsmittel, das zwischen dem Eingabegerät und dem Träger angeordnet ist, vorgesehen. Als Dämpfungsmittel wird beispielsweise eine Haft-, Roll-, Gleitreibung oder viskoser Reibung erzeugende Vorrichtung verstanden, die der Bewegung von Eingabeteil und Tilgerkörper entgegenwirkt und so eine Abnahme der Schwingungsmaximalamplitude bewirkt.

Beispielsweise weisen die ersten Federmittel und die zweiten Federmittel mehrere, jeweils aus einem Stahlfederblech ausgebildete Federn auf, die jeweils zwei Befestigungsbereiche und einen dazwischen angeordneten, frei schwingenden, die wirksame Federlänge definierenden Biegeabschnitt aufweisen. Bevorzugt sind die ersten und zweiten Federmittel als abschnittsweise U-förmige Federstahlbleche ausgebildet. Beispielsweise umfassen die zweiten, dem Tilgerkörper zugeordneten Federmittel vier Federn und die ersten, dem Eingabeteil zugeordneten Federmittel ebenfalls vier Federn. Beispielsweise handelt es sich bei den Federn um aus Federblech hergestellte Stanzteile.

Bevorzugt sind die ersten Federmittel und zweiten Federmittel im Wesentlichen in einer gemeinsamen Ebene angeordnet.

Gemäß einer Ausgestaltung kann das Eingabeteil neben dem eigentlichen, kommerziell erhältlichen Touchpad oder Touchscreen einen damit starr verbundenen Zusatzkörper aufweisen. Als Zusatzkörper wird beispielsweise ein Körper verstanden, der eine höhere Massendichte als eine berührempfindliche Anzeige aufweist, beispielsweise von mehr als 2.000 kg/ m³, bevorzugt mehr als 7.000 kg/ m³, noch bevorzugter mehr als 10.000 kg/m³. Die Zusatzmasse kann beliebig geformt sein. Bevorzugt ist die Zusatzmasse aus einem Metall, wie Zink oder Blei oder einer metallischen Legierung, wie einer zink- und/oder bleihaltigen Legierung, beispielsweise ZAMAK. Bevorzugt ist die Zusatzmasse auf der dem Bediener abgewandten Seite des Touchscreens oder Touchpads vorgesehen. Die Zusatzmasse hat die Aufgabe, dass der Schwerpunkt des Eingabeteils außerhalb des durch das Touchpad bzw. den Touchscreen definierten Volumens angeordnet ist und möglichst auf der Wirkachse des Aktuators angeordnet ist, um die Gefahr der Anregung einer haptisch störenden Rotationsbewegung insbesondere des Eingabeteils zu minimieren.

Zur Realisierung einer besonders kompakten Ausführungsform bei gleichzeitig ausgeprägter Schwerpunktverlagerung ist gemäß einer bevorzugten Ausgestaltung der Träger so angeordnet, dass er in ein durch das vom Eingabeteil definiertes Hohlvolumen eingreift.

Beispielsweise ist die Resonanzfrequenz der schwingbeweglichen Systeme aus Tilgerkörper einerseits und Eingabeteil andererseits im Wesentlichen übereinstimmend ausgelegt, indem die jeweiligen Federkonstanten der ersten und zweiten Federmittel den Massen entsprechend eingestellt sind.

Bevorzugt ist die Masse des Tilgerkörpers, einschließlich der zuvor beschriebenen Spule, geringer als die Masse des Eingabeteils.

Bevorzugt ist die Masse des Tilgerkörpers größer als ein Viertel der Masse des Eingabeteils, bevorzugter ist die Masse des Tilgerkörpers größer als ein Viertel der Masse des Eingabeteils.

Bevorzugt ist die die Wirkrichtung des Aktuators parallel zu einer von dem Eingabeteil definierten Eingabefläche.

Bevorzugt liegt der durch das Eingabeteil bestimmte Schwerpunkt auf einer durch die Wirkrichtung beschriebenen Achse des Aktuators.

Beispielsweise ist der Tilgerkörper plattenförmig ausgestaltet. Bevorzugt ist der Tilgerkörper räumlich bezogen auf einen Bediener unterhalb des Eingabeteils, bevorzugt zwischen dem Eingabeteil und dem Träger angeordnet.

Die Erfindung betrifft ferner die Verwendung des berührempfindlichen Eingabegeräts in einer der zuvor beschriebenen Ausführungsformen in einem Kraftfahrzeug, insbesondere in einer Mittelkonsole eines Kraftfahrzeugs.

Die Erfindung betrifft ferner ein Verfahren zum Ansteuern eines berührempfindlichen Eingabegeräts in einer der zuvor beschriebenen Ausführungsformen. In einem Bereitstellungschritt wird das berührempfindliche Eingabegeräts in einer der zuvor beschriebenen Ausführungsformen bereitgestellt und weist somit mindestens einen Träger, ein berührempfindliches Eingabeteil, wie ein Touchpad oder ein Touchscreen, auf, das an dem Träger mittels erster Federmittel längs einer Auslenkrichtung elastisch rückstellend, schwingbeweglich gelagert ist. Das bereitgestellte berührempfindliche Eingabegerät weist ferner einen Tilgerköper auf, der mittels zweiter Federmittel wenigstens entlang der Auslenkrichtung bewegbar an dem Träger elastisch rückstellend, schwingbeweglich gelagert ist. Das bereitgestellte Eingabegerät weist einen zwischen dem Eingabeteil und dem Tilgerkörper wirkenden Aktuator zur Bewirkung der Auslenkung des Eingabeteils und des Tilgerkörpers aus einer zugehörigen Ruhestellung auf. Der Aktuator hat dabei eine Wirkrichtung, die eine zur Auslenkrichtung parallele Wirkrichtungskomponente aufweist, um einerseits mit der Auslenkung eine gedämpfte, freie Schwingung des Eingabeteils zur Erzeugung einer haptischen Rückmeldung entlang der Auslenkungsrichtung zu bewirken und andererseits mit der Auslenkung eine gedämpfte, freie Schwingung des Tilgerkörpers in der zur Bewegung des Eingabeteils entgegensetzten Richtung zu bewirken. Ferner wird eine Ansteuerelektronik zur Erzeugung eines elektrischen Steuersignals für den Aktuator bereitgestellt. Das erfindungsgemäße Verfahren weist einen Ansteuerschritt auf. Bei dem erfolgt ein Ansteuern des Aktuators mittels der Ansteuerelektronik derart, dass nach einer Berührung durch das Eingabeteil und optional sofern eine ein vorgegebenes Maß überschreitende Betätigungskraft durch einen optionalen Kraftsensor detektiert wird, ein Steuersignal mit sich periodisch wiederholendem Beschleunigungspuls erzeugt wird. Bei diesem erfindungsgemäßen Ansteuerschritt ist die die periodische Abfolge der Beschleunigungspulse bestimmende Periodendauer größer gewählt als die größte aus erster Abklingdauer der gedämpften Schwingung des Tilgerkörpers und aus zweiter Abklingdauer der gedämpften Schwingung des Eingabeteils, wobei die erste Abklingdauer und die zweite Abklingdauer jeweils durch den Zeitpunkt bestimmt ist, an dem die Schwingungsmaximalamplitude einer der ersten Auslenkung nachfolgenden Auslenkungen betragsmäßig gegenüber der Schwingungsmaximalamplitude der ersten Auslenkung um 20dB abgefallen ist, sofern durch den Beschleunigungspuls ein Überschwingen der Ruhelage nach der ersten Auslenkung bewirkt wird. Für den Fall, dass der ersten Auslenkung kein Überschwingen der Ruhelage folgt, und beispielsweise eine asymptotische Annäherung an die Ruhelage vollzogen wird, wird die erste und zweite Abklingdauer jeweils durch den Zeitpunkt bestimmt, an dem die Amplitude der ersten Auslenkung, also die Auslenkamplitude von Tilgerkörper bzw. Eingabeteil, nach Erreichen der Schwingungsmaximalamplitude gegenüber der Schwingungsmaximalamplitude um 40dB abgefallen ist.

Die Erfindung sowie das technische Umfeld werden nachfolgend anhand der Figur näher erläutert. Es ist darauf hinzuweisen, dass die Figuren eine besonders bevorzugte Ausführungsvariante der Erfindung zeigen, die Erfindung jedoch nicht darauf beschränkt ist. Es zeigt schematisch:
- Fig. 1: eine Schnittdarstellung einer erfindungsgemäßen Ausführungsform des Eingabegeräts;
- Fig. 2: eine Ansicht des Schwingungsverhaltens von dem Eingabeteil 2 und dem Tilgerkörper 6 in Kombination und zeitlicher überlagerter Darstellung mit dem erfindungsgemäßen Steuersignal P(t).

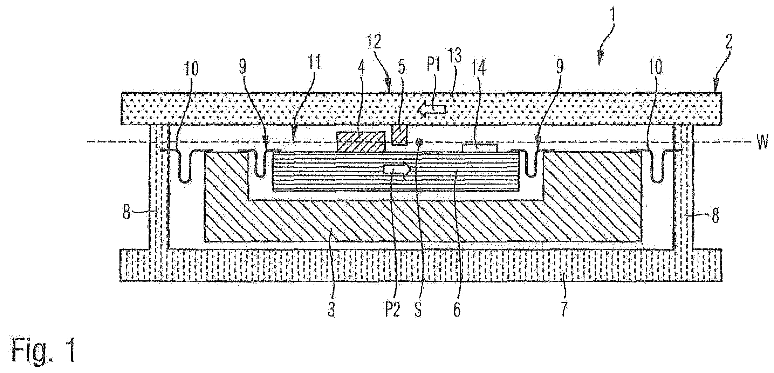

Figur 1 zeigt eine erfindungsgemäße Ausführungsform des Eingabegeräts 1. Es weist einen Träger 3 auf, der der Befestigung des Eingabegeräts 1 an einer nicht dargestellten Mittelkonsole oder einem nicht dargestellten Armaturenbrett eines Kraftfahrzeugs dient. An dem Träger 3 ist elastisch rückstellend und schwingbeweglich ein Eingabeteil 2 gelagert. Dieses weist ein dem Bediener zugewandtes Touchpad 13 und einen über die Befestigungspfosten 8 mit dem Touchpad 13 starr verbundenen Zusatzkörper 7 auf. Alternativ zu dem Touchpad 13 kann ein Touchscreen, d.h. eine Kombination einer elektronischen Pixelmatrixanzeige mit einer Berührsensorik, vorgesehen sein. Das Touchpad 13 detektiert die Berührung eines Bedienorgans, beispielsweise des Fingers eines Bedieners, auf der durch das Eingabeteil 2 definierten Eingabefläche 12.

Das Eingabeteil 2 ist mittels erster Federmittel 10 elastisch rückstellend und schwingbeweglich am Träger 3 gelagert. Bei den ersten Federmitteln 10 handelt es sich um vier Federstahlbleche, die abschnittsweise U-förmig ausgebildet sind. Die ersten Federmittel 10 sind so angeordnet, dass eine rückstellende Bewegung des Eingabeteils 2, d.h. Touchpad 13 samt des starr mit dem Touchpad 13 verbundenen Zusatzkörpers 7 in einer zur Eingabefläche 12 parallelen Richtung ermöglicht ist.

Die Masse des Zusatzkörpers 7 ist so gewählt, dass der Schwerpunkt S des gesamten Eingabeteils 2 zwischen dem Touchpad 13 und dem Zusatzkörper 7 befindlich ist und somit in der Ebene angeordnet ist, in der die durch die Achse W angedeutete Wirkrichtung eines elektromagnetischen Aktuators 4 liegt, der der elektromagnetisch bewirkten Auslenkung des Eingabeteils 2 aus der Ruhelage dient, wie durch den Pfeil P1 angedeutet, um aufgrund der Auslenkung und ihrer haptischen Wahrnehmbarkeit durch einen die Eingabefläche 12 berührenden Finger eine haptische Rückmeldung seitens des Bedieners hervorzurufen. Der Aktuator 4 weist eine Spule und einen mit dem Magnetfeld der Spule zusammenwirkenden Anker 5 auf, der am Eingabeteil 2 starr befestigt ist. Der Aktuator 4 wird durch eine Ansteuerelektronik 11 angesteuert, indem diese ein elektronisches Steuersignal für den Aktuator 4 bereitstellt.

Wie Figur 1 ferner zeigt, stützt sich der Aktuator 4 insbesondere dessen Spule an einem plattenförmigen Tilgerkörper 6 ab, der seinerseits über zweite Federmittel 9 elastisch rückstellend und schwingbeweglich am Träger 3 gelagert ist.

Bei den zweiten Federmitteln 9 handelt es sich ebenfalls um Federn aus Federstahlbleche, die wie die der ersten Federmittel 10 im Wesentlichen U-förmig ausgebildet sind. Die Federn der ersten Federmittel 10 und der zweiten Federmittel 9 sind im Wesentlichen in einer gemeinsamen Ebene angeordnet. Alternativ wären auch andere Ausgestaltungen der Federn denkbar, wie Blattfedern oder Spiralfedern etc.

Die durch die zweiten Federmittel 9 bereitgestellte, elastisch rückstellend wirkende und schwingbewegliche Lagerung des Tilgerkörpers 6 dient der Aufnahme des durch den Aktuator 4 erzeugten Gegenimpulses P2, so dass der Aktuator 4 und somit die Haptikerzeugung aufgrund dessen elastischer Abstützung über den Tilgerkörper 6 gegenüber dem Träger 3 in Bezug auf die Stoß- und Schwingungsübertragung entkoppelt ist. Damit ist der durch die Haptikerzeugung hervorgerufene akustische Schallübergang in den Träger 3 und insbesondere in die angrenzend an den Träger 3 angeordnete Fahrzeugumgebung, wie eine Mittelkonsolenverkleidung oder Dergleichen, verringert. Der zuvor erwähnte Zusatzkörper 7 und die sich aufgrund des Zusatzkörpers 7 ergebende Schwerpunktlage S sorgt ferner dafür, dass das Eingabeteil 2 durch den Aktuator 4 eine zumindest annährend reine transversale Schwingungsanregung, d.h. möglichst ohne rotatorische Schwingungsmoden, erfährt.

Wie aus Figur 1 ersichtlich ist, sind der Aktuator 4, der Tilgerkörper 6 und der Träger 3 in einem durch das Eingabeteil 2 definierten Hohlvolumen 11 ganz oder wenigstens teilweise angeordnet. Damit wird einerseits eine bauraumsparende Auslegung des Eingabegeräts 1 erreicht. Andererseits kann durch diese Auslegung eine Bewegungsanregung durch den Aktuator 4 realisiert werden, die möglichst rein translatorisch, d.h. möglichst frei von Rotationsschwingungen ist. Nur durch die den Hohlraum 11 definierende Konstruktion ist es möglich, dass die Wirkachse W des Aktuators den gemeinsamen Schwerpunkt aus Eingabeteil 2 und Zusatzkörper 7 schneidet und gleichzeitig die durch die Wirkrichtung W beschriebene Achse parallel zur Eingabefläche 12 verläuft. Die Masse des Tilgerkörpers 6 einschließlich der zum Aktuator 4 gehörigen Spule ist geringer als die Masse des Eingabeteils 2 aber gleichzeitig größer als ein Viertel der Masse des Eingabeteils 2.

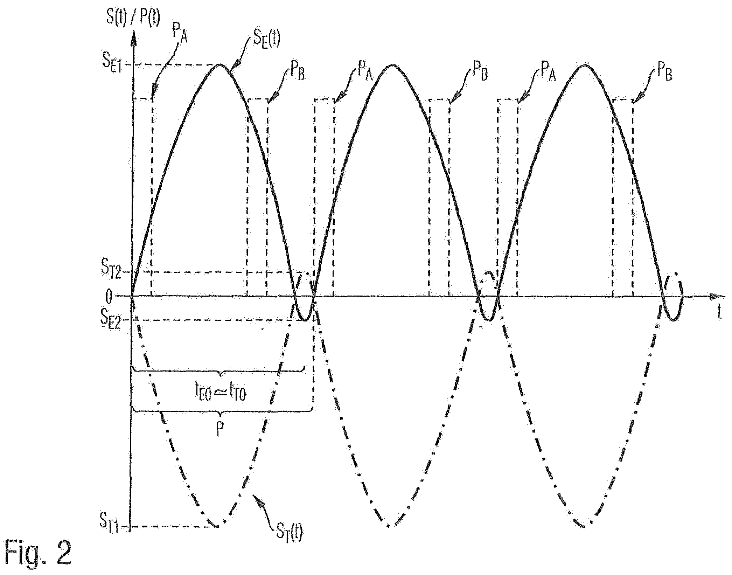

Der Tilgerkörper 6 ist zur Realisierung einer bauraumsparenden Ausführungsform in einer Ausnehmung des Trägers 3 angeordnet. Zur Abstimmung der jeweiligen Auslenkgeschwindigkeiten von Tilgerkörper 6 einerseits und Eingabeteil 2 andererseits ist eine genaue Abstimmung der Federkonstante der zweiten Federmittel 9 jeweils im Vergleich zur Federkonstanten der ersten Federmittel 10 erforderlich. Eine streng synchrone Bewegung von Tilgerkörper 6 und Eingabeteil 2 ist in der Praxis nur schwer zu erreichen. Es wird daher eine spezielle Ansteuerung des Aktors 4 durch ein Steuersignal, wie in Figur 2 gezeigt, durch die vorliegende Erfindung vorgeschlagen.

In Figur 2 ist der zeitliche Verlauf P(t) des Steuersignais aufgetragen. Dieses weist periodisch wiederkehrende Beschleunigungspulse P_{A}, deren Periodendauer durch P bezeichnet ist und periodisch wiederkehrende Bremspulse P_{B} auf. Der Darstellung des Steuersignals P(t) der Figur 2 ist die zeitliche Auslenkung S_{E}(t) des Eingabeteils 2 und die zeitliche Auslenkung S_{T}(t) des Tilgerkörpers 6 überlagert dargestellt, wobei "0" die Ruhelage angibt. Wie aus der Figur 2 zu entnehmen ist, reagieren Tilgerkörper 6 und Eingabeteil 2 auf den Beschleunigungspuls P_{A} mit einer Auslenkung in die Maximalauslenkung S_{E1} beziehungsweise S_{T1}. Nach dieser Maximalauslenkung erfahren beide durch den Bremspuls P_{B} eine Abbremsung, so dass zwar noch jeweils ein erstes Überschwingen der Ruhelage 0, auch Nulldurchgang genannt, erreicht wird, aber die nachfolgende, maximale Schwingungsamplitude mit einer gegenüber der Maximalauslenkung S_{E1} beziehungsweise S_{T1} der ersten Auslenkung betragsmäßig um wenigstens 20db verringert ist, die hier mit S_{E2} beziehungsweise S_{T2} bezeichnet ist. Mit Erreichen dieser Maximalauslenkung ist die erfindungsgemäße erste und zweite Abklingdauer t₀₁ bzw. t₀₂ definiert, die hier aufgrund unzureichender zeitlicher Auflösung der Darstellung für das Eingabeteil 2 und den Tilgerkörper 6 zumindest annähernd gleich ausfällt. Die Periodendauer des Beschleunigungspuls P_{B}, d.h. der zeitliche Abstand zwischen zwei unmittelbar aufeinanderfolgenden Beschleunigungspulsen P_{B} ist somit größer als die erste Abklingdauer t₀₁ von Tilgerkörper 6 und zweiter Abklingdauer t₀₂ des Eingabeteils 2 und dabei so gewählt, dass die erneute Beschleunigung beider durch den Beschleunigungspuls P_{A} nach dem zweiten Nulldurchgang von Eingabeteil 2 und nach dem zweiten Nulldurchgang des Tilgerkörpers 6 erfolgt. Dadurch wird eine präzise und möglichst synchrones Schwingungsverhalten von Tilgerkörper 6 und Eingabeteil 2 erreicht.

## Patentansprüche

1. Berührempfindliches Eingabegerät (1), aufweisend:
einen Träger (3);
ein berührempfindliches Eingabeteil (2), wie ein Touchpad oder ein Touchscreen, das an dem Träger (3) mittels erster Federmittel (10) längs einer Auslenkrichtung elastisch rückstellend, schwingbeweglich gelagert ist;
einen Tilgerköper (6), der mittels zweiter Federmittel (9) wenigstens entlang der Auslenkrichtung bewegbar an dem Träger (3) elastisch rückstellend, schwingbeweglich gelagert ist;
wenigstens einen zwischen dem Eingabeteil (2) und dem Tilgerkörper (6) wirkenden Aktuator (4) zur Bewirkung der Auslenkung des Eingabeteils (2) und des Tilgerkörpers (6) aus einer zugehörigen Ruhestellung mit wenigstens einer Wirkrichtung, die eine zur Auslenkrichtung parallele Wirkrichtungskomponente (W) aufweist, um nach der Auslenkung eine gedämpfte, freie Schwingung des Eingabeteils (2) zur Erzeugung einer haptischen Rückmeldung entlang der Auslenkungsrichtung zu bewirken und nach der Auslenkung eine gedämpfte, freie Schwingung des Tilgerkörpers (6) in der zur Bewegung des Eingabeteils (2) entgegensetzten Richtung zu bewirken; und
eine Ansteuerelektronik zur Erzeugung eines elektrischen Steuersignals (P(t)) für den wenigstens einen Aktuator (4) **dadurch gekennzeichnet, dass** nach einer Berührung des Eingabeteils (2) und optional sofern eine ein vorgegebenes Maß überschreitende Betätigungskraft durch einen optionalen Kraftsensor am Eingabeteil (2) detektiert wird, das elektrische Steuersignal (P(t)) mit einem sich periodisch wiederholenden Beschleunigungspuls (P_{A}) erzeugt wird, wobei der Beschleunigungspuls (P_{A}) mindestens eine erste Auslenkung von Eingabeteil (2) und Tilgerkörper (6) bewirkt und eine die periodische Abfolge des Beschleunigungspulses (P_{A}) bestimmende Periodendauer (P) größer gewählt ist als die größte aus erster Abklingdauer (t_{T0}) der gedämpften Schwingung des Tilgerkörpers (6) und zweiter Abklingdauer (t_{E0}) der gedämpften Schwingung des Eingabeteils (2), wobei die erste Abklingdauer (t_{E0}) und zweite Abklingdauer (t_{T0}) jeweils durch den Zeitpunkt bestimmt ist, an dem die Schwingungsmaximalamplitude (S_{T2}, S_{E2}) einer der ersten Auslenkung nachfolgenden Auslenkungen betragsmäßig gegenüber der Schwingungsmaximalamplitude (S_{T1}, S_{E1}) der ersten Auslenkung um 20dB abgefallen ist oder für den Fall, dass der ersten Auslenkung kein Überschwingen der Ruhelage folgt, durch den Zeitpunkt bestimmt ist, an dem die Amplitude der ersten Auslenkung nach Erreichen der Schwingungsmaximalamplitude (S_{T1}, S_{E1}) gegenüber der Schwingungsmaximalamplitude (S_{T1}, S_{E1}) um 40dB abgefallen ist.

2. Berührempfindliches Eingabegerät (1) nach dem vorhergehenden Anspruch, wobei das elektrische Steuersignal (P(t)) innerhalb einer Periode ferner einen Bremspuls (P_{B}) aufweist.

3. Berührempfindliches Eingabegerät (1) nach dem vorhergehenden Anspruch, wobei eine Dämpfung der gedämpften Schwingung von Eingabeteil (2) und Tilgerkörper (6) und/oder der Bremspuls (P_{B}) so gewählt sind, dass die erste Abklingdauer (t_{T0}) und die zweite Abklingdauer (t_{E0}) jeweils zwischen einem ersten und zweiten Nulldurchgang von Eingabeteil (2) oder Tilgerkörper (6) erreicht ist.

4. Berührempfindliches Eingabegerät (1) nach dem vorhergehenden Anspruch, mit einem ersten Dämpfungsmittel, das zwischen dem Träger (3) und dem Tilgerkörper (6) vorgesehen ist und mit einem zweiten Dämpfungsmittel, das zwischen dem Eingabeteil (2) und dem Träger (3) angeordnet ist.

5. Berührempfindliches Eingabegerät (1) nach einem der vorhergehenden Ansprüche, wobei die Masse des Tilgerkörpers (6) geringer ist als die Masse des Eingabeteils (2).

6. Berührempfindliches Eingabegerät (1) nach dem vorhergehenden Anspruch, wobei die Masse des Tilgerkörpers (6) größer ist als ein Viertel der Masse des Eingabeteils (2).

7. Berührempfindliches Eingabegerät (1) nach einem der vorhergehenden Ansprüche, wobei die Wirkrichtung (W) parallel zu einer von dem Eingabeteil (2) definierten Eingabefläche (12) ist.

8. Berührempfindliches Eingabegerät (1) nach einem der vorhergehenden Ansprüche, wobei der durch das Eingabeteil (2) definierte Schwerpunkt (S) auf einer durch die Wirkrichtung (W) definierten Achse liegt.

9. Berührempfindliches Eingabegerät (1) nach einem der vorhergehenden Ansprüche, wobei der Aktuator (4) jeweils ein elektromagnetischer Linearaktuator, bevorzugt ein elektromagnetischer Linearaktuator mit Flachanker, ist.

10. Verwendung des berührempfindlichen Eingabegeräts (1) nach einem der vorhergehenden Ansprüche in einem Kraftfahrzeug, insbesondere in einer Mittelkonsole eines Kraftfahrzeugs.

11. Verfahren zum Ansteuern eines berührempfindlichen Eingabegeräts (1) aufweisend die folgenden Schritte:
Bereitstellen eines berührempfindlichen Eingabegeräts (1), aufweisend einen Träger (3); ein berührempfindliches Eingabeteil (2), wie ein Touchpad oder ein Touchscreen, das an dem Träger (3) mittels erster Federmittel (10) längs einer Auslenkrichtung elastisch rückstellend, schwingbeweglich gelagert ist; einen Tilgerköper (6), der mittels zweiter Federmittel (9) wenigstens entlang der Auslenkrichtung bewegbar an dem Träger (3) elastisch rückstellend, schwingbeweglich gelagert ist; wenigstens einen zwischen dem Eingabeteil (2) und dem Tilgerkörper (6) wirkenden Aktuator (4) zur Bewirkung der Auslenkung des Eingabeteils (2) und des Tilgerkörpers (6) aus einer zugehörigen Ruhestellung mit wenigstens einer Wirkrichtung, die eine zur Auslenkrichtung parallele Wirkrichtungskomponente (W) aufweist, um nach der Auslenkung eine gedämpfte, freie Schwingung des Eingabeteils (2) zur Erzeugung einer haptischen Rückmeldung entlang der Auslenkungsrichturig zu bewirken und nach der Auslenkung eine gedämpfte, freie Schwingung des Tilgerkörpers (6) in der zur Bewegung des Eingabeteils (2) entgegensetzten Richtung zu bewirken; sowie eine Ansteuerelektronik zur Erzeugung eines elektrischen Steuersignals für den Aktuator (4);
Ansteuern des wenigstens einen Aktuators (4) mittels der Ansteuerelektronik **dadurch gekennzeichnet, dass** nach einer Berührung durch das Eingabeteil (2) und optional sofern eine ein vorgegebenes Maß überschreitende Betätigungskraft durch einen optionalen Kraftsensor detektiert wird, das elektrische Steuersignal (P(t)) mit einem sich periodisch wiederholenden Beschleunigungspuls (P_{A}) erzeugt wird, wobei der Beschleunigungspuls (P_{A}) mindestens eine erste Auslenkung von Eingabeteil (2) und Tilgerkörper (6) bewirkt und eine die periodische Abfolge des Beschleunigungspulses (P_{A}) bestimmende Periodendauer (P) größer gewählt ist als die größte aus erster Abklingdauer (t_{T0}) der gedämpften Schwingung des Tilgerkörpers (6) und zweiter Abklingdauer (t_{E0}) der gedämpften Schwingung des Eingabeteils (2), wobei die erste Abklingdauer (t_{E0}) und zweite Abklingdauer (t_{T0}) jeweils durch den Zeitpunkt bestimmt ist, an dem die Schwingungsmaximalamplitude (S_{T2}, S_{E2}) einer der ersten Auslenkung nachfolgenden Auslenkungen betragsmäßig gegenüber der Schwingungsmaximalamplitude (S_{T1}, S_{E1}) der ersten Auslenkung um 20dB abgefallen ist oder für den Fall, dass der ersten Auslenkung kein Überschwingen der Ruhelage folgt, durch den Zeitpunkt bestimmt ist, an dem die Amplitude der ersten Auslenkung nach Erreichen der Schwingungsmaximalamplitude (S_{T1}, S_{E1}) gegenüber der Schwingungsmaximalamplitude (S_{T1}, S_{E1}) um 40dB abgefallen ist.

## Claims

1. Touch-sensitive input device (1), having:
a carrier (3)
a touch-sensitive input part (2), such as touchpad or a touchscreen, which is supported on the carrier (3) by means of first spring means (10) so as to be elastically restoring and capable of an oscillating movement along a deflection direction;
an absorber body (6), which is supported so as to be movable at least along the deflection direction on the carrier (3) by means of second spring means (9) so as to be elastically restoring and capable of an oscillating movement;
at least one actuator (4), acting between the input part (2) and the absorber body (6), to bring about the deflection of the input part (2) and of the absorber body (6) from an associated rest position with at least one effective direction, which has an effective direction component (W) parallel to the deflection direction, in order to bring about, after the deflection, a dampened, free oscillation of the input part (2) to produce haptic feedback along the deflection direction and to bring about, after the deflection, a dampened, free oscillation of the absorber body (6) in the direction opposite to the movement of the input part (2); and
a control electronic system for generating an electrical control signal (P(t)) for the at least one actuator (4), **characterized in that**, after the input part (2) has been touched and optionally if an actuating force exceeding a specified extent is detected by an optional force sensor on the input part (2), the electrical control signal (P(t)) is generated with a periodically repeating acceleration pulse (P_{A}), wherein the acceleration pulse (P_{A}) brings about at least a first deflection of the input part (2) and the absorber body (6) and a period duration (P) determining the periodic sequence of the acceleration pulse (P_{A}) is selected to be greater than the greater one of a first decay duration (t_{T0}) of the dampened oscillation of the absorber body (6) and a second decay duration (t_{E0}) of the dampened oscillation of the input part (2), wherein the first decay duration (t_{E0}) and the second decay duration (t_{T0}) are each determined by the time at which the oscillation maximum amplitude (S_{T2}, S_{E2}) of one of the deflections following the first deflection has dropped in terms of absolute value by 20 dB with respect to the oscillation maximum amplitude (S_{T1}, S_{E1}) of the first deflection or, for the event that the first deflection is not followed by an overshooting of the rest position, is determined by the time at which the amplitude of the first deflection after reaching the oscillation maximum amplitude (S_{T1}, S_{E1}) has dropped by 40 dB with respect to the oscillation maximum amplitude (S_{T1}, S_{E1}).

2. Touch-sensitive input device (1) according to the preceding claim, wherein the electrical control signal (P(t)) within a period furthermore has a brake pulse (P_{B}).

3. Touch-sensitive input device (1) according to the preceding claim, wherein damping of the damped oscillation of the input part (2) and the absorber body (6) and/or the brake pulse (P_{B}) are selected such that the first decay duration (t_{T0}) and the second decay duration (t_{E0}) are each reached between the first and second zero crossing of the input part (2) or absorber body (6).

4. Touch-sensitive input device (1) according to the preceding claim, having a first damping means, which is provided between the carrier (3) and the absorber body (6), and having a second damping means, which is arranged between the input part (2) and the carrier (3).

5. Touch-sensitive input device (1) according to any one of the preceding claims, wherein the mass of the absorber body (6) is lower than the mass of the input part (2).

6. Touch-sensitive input device (1) according to the preceding claim, wherein the mass of the absorber body (6) is greater than a quarter of the mass of the input part (2).

7. Touch-sensitive input device (1) according to any one of the preceding claims, wherein the effective direction (W) is parallel to an input surface (12) defined by the input part (2).

8. Touch-sensitive input device (1) according to any one of the preceding claims, wherein the centre of gravity (S) defined by the input part (2) lies on an axis defined by the effective direction (W).

9. Touch-sensitive input device (1) according to any one of the preceding claims, wherein the actuator (4) is in each case an electromagnetic linear actuator, preferably an electromagnetic linear actuator having a flat anchor.

10. Use of the touch-sensitive input device (1) according to any one of the preceding claims in a motor vehicle, in particular in a centre console of a motor vehicle.

11. Method for controlling a touch-sensitive input device (1), having the following steps:
providing a touch-sensitive input device (1), having a carrier (3); a touch-sensitive input part (2), such as a touchpad or a touchscreen, which is supported on the carrier (3) by means of first spring means (10) so as to be elastically restoring and capable of an oscillating movement along a deflection direction; an absorber body (6), which is supported so as to be movable at least along the deflection direction on the carrier (3) by means of second spring means (9) so as to be elastically restoring and capable of an oscillating movement; at least one actuator (4), acting between the input part (2) and the absorber body (6), to bring about the deflection of the input part (2) and of the absorber body (6) from an associated rest position with at least one effective direction, which has an effective direction component (W) parallel to the deflection direction, in order to bring about, after the deflection, a dampened, free oscillation of the input part (2) to produce haptic feedback along the deflection direction and to bring about, after the deflection, a dampened, free oscillation of the absorber body (6) in the direction opposite to the movement of the input part (2); and a control electronic system for generating an electrical control signal for the actuator (4),
controlling the at least one actuator (4) by means of the control electronic system,
**characterized in that**, after a touch has been detected by the input part (2) and optionally if an actuating force exceeding a specified extent is detected by an optional force sensor, the electrical control signal (P(t)) is generated with a periodically repeating acceleration pulse (PA), wherein the acceleration pulse (P_{A}) brings about at least a first deflection of the input part (2) and the absorber body (6) and a period duration (P) determining the periodic sequence of the acceleration pulse (P_{A}) is selected to be greater than the greater one of a first decay duration (t_{T0}) of the dampened oscillation of the absorber body (6) and a second decay duration (t_{E0}) of the dampened oscillation of the input part (2), wherein the first decay duration (t_{E0}) and the second decay duration (t_{T0}) are each determined by the time at which the oscillation maximum amplitude (S_{T2}, S_{E2}) of one of the deflections following the first deflection has dropped in terms of absolute value by 20 dB with respect to the oscillation maximum amplitude (S_{T1}, S_{E1}) of the first deflection or, for the event that the first deflection is not followed by an overshooting of the rest position, is determined by the time at which the amplitude of the first deflection after reaching the oscillation maximum amplitude (S_{T1}, s_{E1}) has dropped by 40 dB with respect to the oscillation maximum amplitude (S_{T1}, S_{E1}).

## Revendications

1. Dispositif d'entrée tactile (1) comprenant :
un support (3) ;
une partie d'entrée tactile (2), telle qu'un pavé tactile ou un écran tactile, qui est montée sur le support (3) de manière oscillante et à rappel élastique suivant une direction de déviation à l'aide de premiers moyens à ressort (10) ;
un corps absorbeur (6) qui est monté sur le support (3) de manière oscillante et à rappel élastique de façon déplaçable au moins suivant la direction de déviation à l'aide de deuxièmes moyens à ressort (9) ;
au moins un actionneur (4) agissant entre la partie d'entrée (2) et le corps absorbeur (6) et destiné à provoquer la déflexion de la partie d'entrée (2) et du corps absorbeur (6) depuis une position de repos associée suivant au moins une direction effective qui a une composante de direction effective (W) parallèle à la direction de déviation afin de provoquer, après la déviation, une vibration libre amortie de la partie d'entrée (2) pour générer un retour haptique suivant la direction de déviation et afin de provoquer, après la déviation, une vibration libre amortie du corps absorbeur (6) suivant la direction opposée au déplacement de la partie d'entrée (2) ; et
une électronique de commande destinée à générer un signal de commande électrique (P(t)) destiné à l'au moins un actionneur (4), **caractérisé en ce que**, après que la partie d'entrée (2) a été touchée et éventuellement si une force d'actionnement qui dépasse un niveau prédéterminé est détectée par un capteur de force optionnel sur la partie d'entrée (2), le signal de commande électrique (P(t)) est généré avec une impulsion d'accélération (P_{A}) qui se répète périodiquement, l'impulsion d'accélération (P_{A}) provoquant au moins une première déviation de la partie d'entrée (2) et du corps absorbeur (6) et une durée de période (P), qui détermine la séquence périodique de l'impulsion d'accélération (P_{A}), étant choisie pour être supérieure à la plus grande parmi la première durée de décroissance (t_{T0}) de la vibration amortie du corps absorbeur (6) et la deuxième durée de décroissance (t_{E0}) de la vibration amortie de la partie d'entrée (2), la première durée de décroissance (t_{E0}) et la deuxième durée de décroissance (t_{T0}) étant chacune déterminées par l'instant où l'amplitude de vibration maximale (S_{T2}, S_{E2}) d'une déviation qui suit la première déviation a chuté en valeur absolue de 20 dB par rapport à l'amplitude de vibration maximale (S_{T1}, S_{E1}) de la première déviation ou étant déterminées, dans le cas où la première déviation n'est suivie d'aucun dépassement de la position de repos, par l'instant où l'amplitude de la première déviation, après avoir atteint l'amplitude d'oscillation maximale (S_{T1}, S_{E1}), a chuté de 40 dB par rapport à l'amplitude de vibration maximale (S_{T1}, S_{E1}).

2. Dispositif d'entrée tactile (1) selon la revendication précédente, le signal de commande électrique (P(t)) comportant en outre une impulsion de freinage (P_{B}) à l'intérieur d'une période.

3. Dispositif d'entrée tactile (1) selon la revendication précédente, l'amortissement de la vibration amortie de la partie d'entrée (2) et du corps absorbeur (6) et/ou de l'impulsion de freinage (PB) étant choisi de telle sorte que la première durée de décroissance (t_{T0}) et la deuxième durée de décroissance (t_{E0}), à chaque fois entre un premier et un deuxième passage par zéro de la partie d'entrée (2) ou du corps absorbeur (6), soient atteintes.

4. Dispositif d'entrée tactile (1) selon la revendication précédente, comprenant un premier moyen d'amortissement, qui est prévu entre le support (3) et le corps absorbeur (6), et un deuxième moyen d'amortissement qui est disposé entre la partie d'entrée (2) et le support (3).

5. Dispositif d'entrée tactile (1) selon l'une des revendications précédentes, la masse du corps absorbeur (6) étant inférieure à la masse de la partie d'entrée (2).

6. Dispositif d'entrée tactile (1) selon la revendication précédente, la masse du corps absorbeur (6) étant supérieure au quart de la masse de la partie d'entrée (2).

7. Dispositif d'entrée tactile (1) selon l'une des revendications précédentes, la direction effective (W) étant parallèle à une surface d'entrée (12) définie par la partie d'entrée (2).

8. Dispositif d'entrée tactile (1) selon l'une des revendications précédentes, le centre de gravité (S) défini par la partie d'entrée (2) étant situé sur un axe défini par la direction effective (W).

9. Dispositif d'entrée tactile (1) selon l'une des revendications précédentes, l'actionneur (4) étant un actionneur linéaire électromagnétique, de préférence un actionneur linéaire électromagnétique muni d'un induit plat.

10. Utilisation du dispositif d'entrée tactile (1) selon l'une des revendications précédentes dans un véhicule automobile, notamment dans une console centrale d'un véhicule automobile.

11. Procédé de commande d'un dispositif d'entrée tactile (1), ledit procédé comportant les étapes suivantes :
fournir un dispositif d'entrée tactile (1) comportant un support (3) ; une partie d'entrée tactile (2), telle qu'un pavé tactile ou un écran tactile, qui est montée sur le support (3) de manière oscillante et à rappel élastique suivant une direction de déviation à l'aide de premiers moyens à ressort (10) ; un corps absorbeur (6) qui est monté sur le support (3) de manière oscillante et à rappel élastique de façon déplaçable au moins suivant la direction de déviation à l'aide de deuxièmes moyens à ressort (9) ; au moins un actionneur (4) agissant entre la partie d'entrée (2) et le corps absorbeur (6) et destiné à provoquer la déflexion de la partie d'entrée (2) et du corps absorbeur (6) depuis une position de repos associée suivant au moins une direction effective qui a une composante de direction effective (W) parallèle à la direction de déviation afin de provoquer, après la déviation, une vibration libre amortie de la partie d'entrée (2) pour générer un retour haptique suivant la direction de déviation et afin de provoquer, après la déviation, une vibration libre amortie du corps absorbeur (6) suivant la direction opposée au déplacement de la partie d'entrée (2) ; et une électronique de commande destinée à générer un signal de commande électrique destiné à l'au moins un actionneur (4),
commander l'au moins un actionneur (4) à l'aide de l'électronique de commande,
**caractérisé en ce que**, après que la partie d'entrée (2) a été touchée et éventuellement si une force d'actionnement qui dépasse un niveau prédéterminé est détectée par un capteur de force optionnel, le signal de commande électrique (P(t)) est généré avec une impulsion d'accélération (P_{A}) qui se répète périodiquement, l'impulsion d'accélération (P_{A}) provoquant au moins une première déviation de la partie d'entrée (2) et du corps absorbeur (6) et une durée de période (P), qui détermine la séquence périodique de l'impulsion d'accélération (PA), étant choisie pour être supérieure à la plus grande parmi la première durée de décroissance (t_{T0}) de la vibration amortie du corps absorbeur (6) et la deuxième durée de décroissance (t_{E0}) de la vibration amortie de la partie d'entrée (2), la première durée de décroissance (t_{E0}) et la deuxième durée de décroissance (t_{T0}) étant chacune déterminées par l'instant où l'amplitude de vibration maximale (S_{T2}, S_{E2}) d'une déviation qui suit la première déviation a chuté en valeur absolue de 20 dB par rapport à l'amplitude de vibration maximale (S_{T1}, S_{E1}) de la première déviation ou étant déterminées, dans le cas où la première déviation n'est suivie d'aucun dépassement de la position de repos, par l'instant où l'amplitude de la première déviation, après avoir atteint l'amplitude d'oscillation maximale (S_{T1}, S_{E1}), a chuté de 40 dB par rapport à l'amplitude de vibration maximale (S_{T1}, S_{E1}).
